# EUROPEAN PATENT SPECIFICATION

(11) **EP 2 812 744 B1**
(45) Date of publication and mention of the grant of the patent: **18.10.2017**
(21) Application number: 13705739.4
(22) Date of filing: 31.01.2013
(51) Int. Cl.: G02B 6/44

(54) **CABLE PORT ASSEMBLIES FOR TELECOMMUNICATIONS ENCLOSURE**
KABELPORTANORDNUNGEN FÜR TELEKOMMUNIKATIONSGEHÄUSE
ENSEMBLES D'ORIFICES DE CÂBLE DESTINÉS À UN BOÎTIER DE TÉLÉCOMMUNICATIONS

(30) Priority: 06.02.2012 US 201261595535 P
(43) Date of publication of application: 17.12.2014
(73) Proprietor: CommScope Connectivity Belgium BVBA, 3010 Kessel-Lo (BE)
(72) Inventor: CLAESSENS, Bart Mattie, B-3500 Hasselt (BE); KEMPENEERS, Dirk, B-3200 Aarschot (BE); FOULON, Wouter, B-3000 Leuven (BE)
(74) Representative: Patentanwälte Bressel und Partner mbB
(86) International application number: PCT/EP2013/051927
(87) International publication number: WO 2013/117484

(56) References cited:
- EP-A1- 2 136 118
- WO-A2-2010/098844
- WO-A2-2011/098389
- US-A1- 2010 189 404

## Description

### Technical Field

The present disclosure relates to telecommunications enclosures, and more particularly, to telecommunications enclosures including cable port assemblies that seal fiber optic cables entering the enclosures.

### Background

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures are adapted to house and protect telecommunications components such as splices, termination panels, power splitters, and wavelength division multiplexers.

It is often preferred for telecommunications enclosures to be re-enterable. The term "re-enterable" means that the telecommunications enclosures can be reopened to allow access to the telecommunications components housed therein without requiring the removal and destruction of the telecommunications enclosures. For example, certain telecommunications enclosures can include separate access panels that can be opened to access the interiors of the enclosures, and then closed to re-seal the enclosures. Other telecommunications enclosures take the form of elongated sleeves formed by wrap-around covers or half-shells having longitudinal edges that are joined by clamps or other retainers. Still other telecommunications enclosures include two half-pieces that are joined together through clamps, wedges or other structures. Telecommunications enclosures are typically sealed to inhibit the intrusion of moisture or other contaminants. A telecommunication enclosure can be found for example in document US 2010/0189404.

### Summary

Aspects of the disclosure are directed a cable seal block including a first housing portion; a second housing portion; a gasket disposed between the first housing portion and the second housing portion; and an activation assembly that axially compresses the gasket when actuated. The first housing portion forms a first end of the cable seal block assembly, defines a stop surface, and includes at least one latching finger extending outwardly past the stop surface in an axial direction.

Aspects of the disclosure also are directed to a cable fixation assembly for mounting to an optical cable having at least on optical fiber and at least one strength member. The cable fixation assembly mounts to a section of the cable at which a jacket has been stripped to reveal the buffered fibers and strength members. The cable fixation assembly includes a body defining a channel extending from a first end of the body towards a second end of the body. The cable fixation assembly also includes an enclosing structure defining a first pocket at the second end of the body. The pocket is sized to receive the at least one strength member. A flexible flange is coupled to the body to at least partially define the first pocket. The flexible flange is configured to flex into and out of the first pocket. A tightening member is mounted to the body and is configured to selectively force the flexible flange towards the first pocket.

Aspects of the disclosure also are directed to a cable port assembly including a seal block assembly; and a fixation assembly. The seal block assembly defines at least one axial passage that is sized to receive at least one fiber optic cable. The seal block assembly includes a gasket that is activated through axial compression. The seal block has a stop surface and a latching finger that cooperate to axially fix the seal block assembly to a cable port defined at an enclosure. The fixation assembly defines an axial channel sized to receive the at least one fiber optic cable. The fixation assembly also is configured to receive and secure at least one strength member of the at least one fiber optic cable. The fixation assembly also defines a pocket having an open face and a slot at the first end of the fixation assembly. The open face extends generally parallel to the axial channel. The open face and slot together define a T-shaped profile.

Aspects of the disclosure also are directed to an enclosure arrangement including a base defining at least one cable port at a first end, the cable port leading from an exterior of the base to an interior of the base. The enclosure arrangement also includes a duct extending through the at least one cable port, and a mounting screw disposed within the interior of the base at the first end of the base adjacent the duct. The duct includes stops extending inwardly into the axial passage at an interior end of the duct. The mounting screw, which has a head facing the interior of the base, is positioned outside of a perimeter of the axial passage through the duct.

Aspects of the disclosure also are directed to a method of installing an optical fiber cable at an enclosure defining at least one cable port at a first end of the enclosure. The method includes loading a seal block assembly onto the optical fiber cable; installing a fixation assembly onto a stripped region of the optical fiber cable; and securing the fixation assembly to the enclosure. Installing the fixation assembly includes routing at least one optical fiber of the optical fiber cable through the fixation assembly and securing at least one strength member of the optical fiber cable to the fixation assembly. Securing the fixation assembly includes hooking the fixation assembly onto a mounting screw protruding inwardly from the first end of the enclosure and tightening the mounting screw to axially secure the optical fiber cable to the first end of the enclosure.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### Brief Description of the Drawings

FIG. 1 is a top, front perspective view of an example base defining cable ports at a first end at which two cable port assemblies are received;
FIG. 2 is a front perspective view of the base and seal block assemblies;
FIG. 3 is a top, rear perspective view of the first end of the base and the cable port assemblies;
FIG. 4 is a perspective view of an example round-type seal block assembly;
FIG. 5 is a perspective view of the seal block assembly of FIG. 4 shown along an axial cross-section;
FIG. 6 is a perspective view of an example oblong-type seal block assembly;
FIG. 7 is a top plan view of the seal block assembly of FIG. 6 shown along an axial cross-section;
FIG. 8 is a top, rear perspective view of the first end of the base with a side portion of the base hidden to reveal a cross-section of two cable ports;
FIG. 9 is a top, rear perspective view of the first end of the base with two seal blocks mounted at the cable ports that were shown in cross-section in FIG. 8, a side portion of the base being hidden for ease in viewing the inner ends of the ports;
FIG. 10 is a bottom perspective view of an example fixation assembly coupled to a stripped region of an optical cable where the optical fibers of the cable are hidden for clarity;
FIG. 11 is a top perspective view of the example fixation assembly of FIG. 10;
FIG. 12 is a bottom perspective view of the example fixation assembly of FIG. 10 shown along an axial cross-section;
FIG. 13 is a top, rear perspective view of the first end of the base with fixation assemblies exploded away from the ports towards an interior of the base and seal block assemblies exploded away from the ports towards an exterior of the base;
FIG. 14 is a top, rear perspective view of the first end of the base with a side portion of the base hidden to reveal a cross-section of two cable ports and a fixation assembly mounted at one of the two cable ports; and
FIG. 15 is a top, rear perspective view of a portion of the base with three cable port assemblies mounted at the first end with a side portion of the base hidden to reveal an axial cross-section of two of the cable port assemblies.

### Detailed Description

Reference will now be made in detail to the exemplary aspects of the present disclosure that are illustrated in the accompanying drawings. Wherever possible, the same reference numbers will be used throughout the drawings to refer to the same or like structure.

In general, optical fiber cables may be routed into an enclosure through one or more cable ports. The cables are mounted to cable port assemblies to secure the cables to the base and to seal the ports around the cables. Certain types of cable port assemblies include seal block assemblies to seal the ports. Certain types of cable port assemblies include fixation assemblies to secure (e.g., axially secure, torsionally secure, laterally secure, etc.) the optical cables. In certain implementations, the fixation assemblies axially fix the optical cables separate from the seal block assemblies.

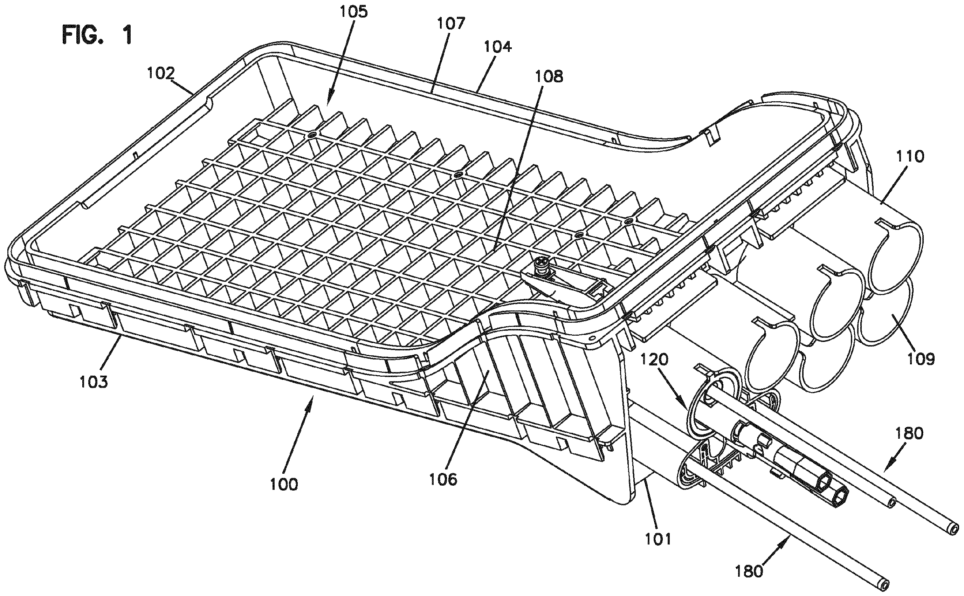

FIG. 1 is a perspective view of an example base 100 of an example telecommunications enclosure assembly. The base 100 extends from a first end 101 to a second end 102. The base 100 also extends from a first side 103 to a second side 104. The base 100 includes a sidewall 106 extending upwardly from a base 108 to define an interior 105. The base 100 is shaped and configured to cooperate with a cover to form an enclosure that defines an interior. One or more telecommunications components may be mounted within the interior of the enclosure. For example, a splice tray assembly may be mounted within the interior.

A gasket or sealing ring may be disposed between the base 100 and the cover around the perimeter of the enclosure. The gasket inhibits dirt, water, or other contaminants from entering the enclosure when the cover is secured to the base 100 (e.g., by the latches). In some implementations, the base 100 defines a gasket channel 107 in which the gasket may seat. In certain implementations, the cover includes a tongue that extends downwardly so that the tongue compresses the gasket in the channel 107 when the cover is disposed on the base 100. In other implementations, the cover may define a second channel instead of the tongue to accommodate the gasket. In still other implementations, the cover may define the channel and the base 100 may define the tongue.

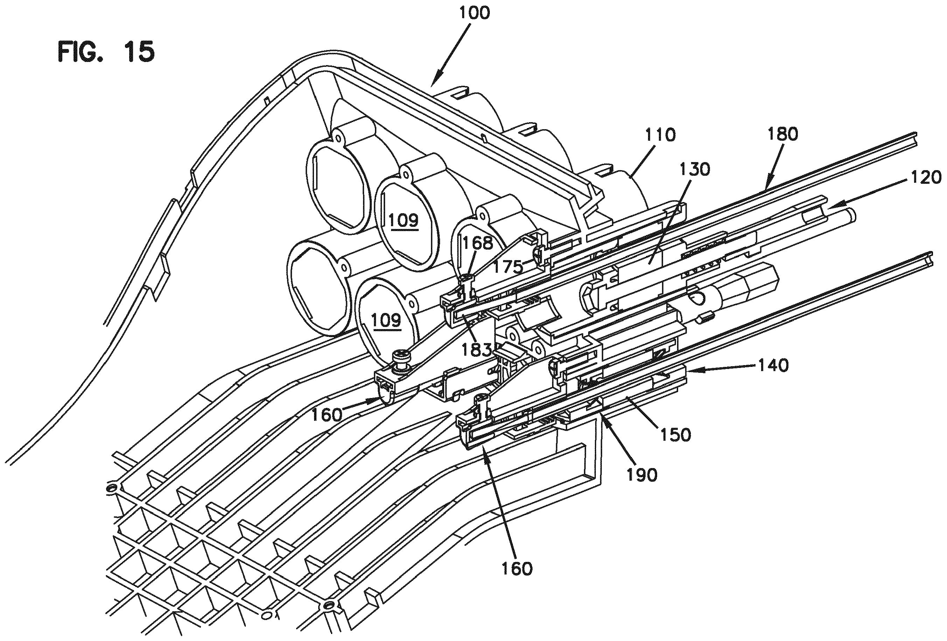

A latch arrangement may be provided to releasably secure the cover in a closed position relative to the base 100. The latch arrangements may be released to enable the cover to be removed from the base 100. Additional details regarding an example latch arrangement, an example splice tray assembly, and an example cover can be found in WO 2013/007662 filed July 11, 2011, and titled "Telecommunications Enclosure with Splice Tray Assembly,". The base 100 defines one or more cable ports 109 at the first end 101 of the base 100. Each cable port 109 is configured to receive a cable port assembly 190 (FIG. 15) including a seal block 120, 140 and a fixation device 160. Fiber optic cables 180 are routed into and out of the enclosure through the seal blocks and are fixed to the enclosure using the fixation devices. In the example shown, the base 100 includes seven ports 109. In other implementations, however, the base 100 may include a greater or lesser number of ports 109. Input and output cables may be routed into the base 100 through the ports 109. As used herein, the terms "input" and "output" are used for convenience and are not intended to be exclusory. Optical signals carried over optical fibers may travel in either or both directions. Accordingly, optical fibers routed through any of the ports 109 may carry input and/or output signals.

In some implementations, at least one of the ports 109 has a different size and/or shape from at least one other port 109. In the example shown, one of the ports 109 defines an oval or oblong cross-sectional profile and the other six ports 109 define round cross-sectional profiles. In other implementations, each of the ports 109 may have any desired cross-sectional profile. In still other implementations, one or more of the round ports 109 may be larger or smaller than others of the round ports 109.

Ducts 110 extend through the first end 101 of the base 100 to define the cable ports 109. The ducts 110 are generally sized and shaped to fit within a respective one of the cable ports 109. In some implementations, a tear-off sealing member is disposed in one or more of the ducts 110. Each sealing member extends across the duct 110 to inhibit contaminants from entering the enclosure. The sealing members are connected to the ducts with weak webs or other frangible connections that facilitate removing the sealing members from the ducts 110. Accordingly, the sealing members temporally seal the ducts 110 until the cable port is needed.

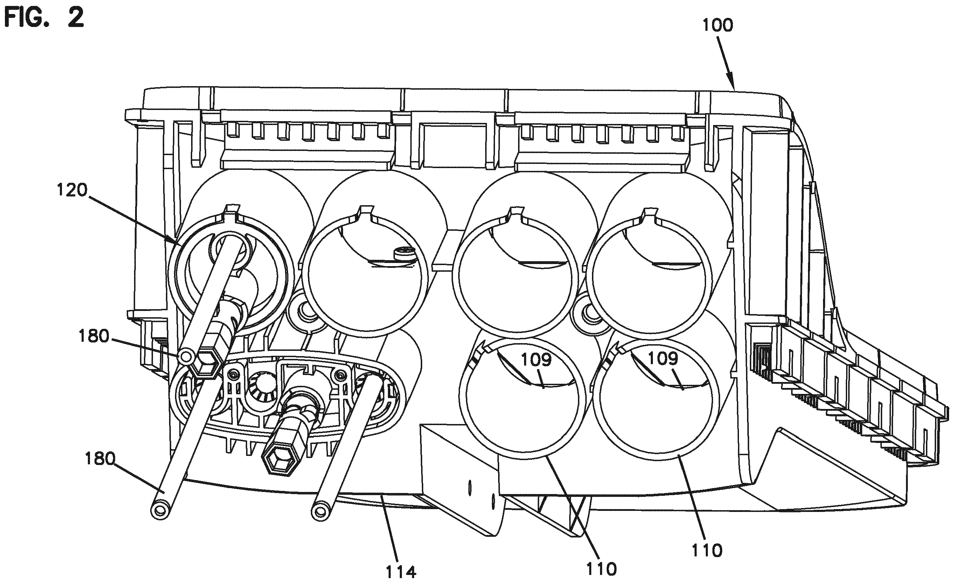

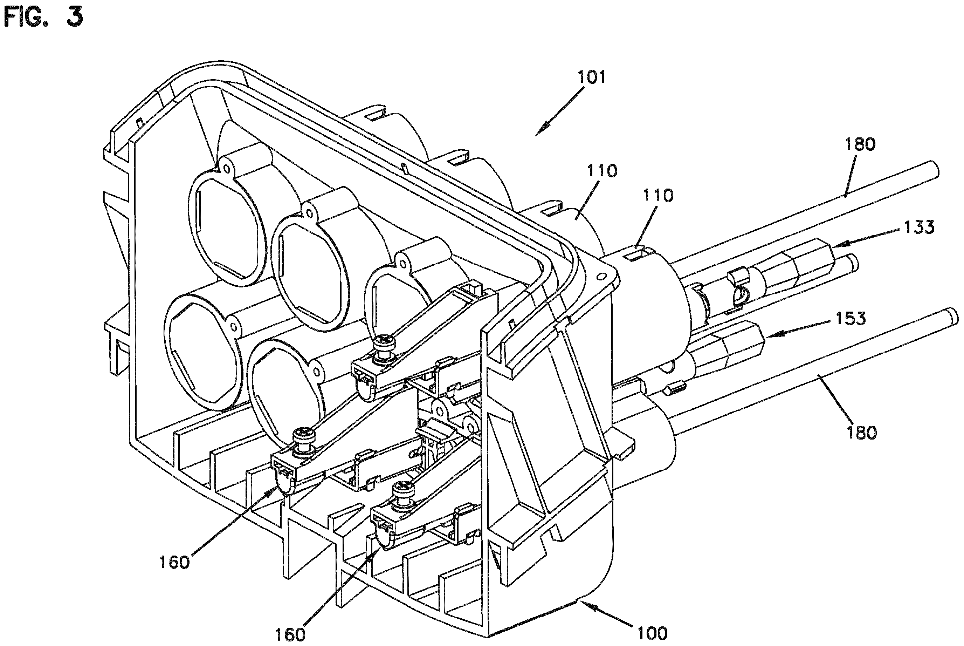

As shown in FIGS. 2 and 3, each of the ducts 110 has a first end extending partially into the interior 105 of the base 100 and a second end extending outwardly from the first end 101 of the base 100. By disposing a portion of each duct 110 within the base interior 105, an overall length of the base 100 is reduced as compared to a base having ducts 110 extending only outside of the base 100. In the example shown, a majority of each duct 110 extends outwardly from the first end 101 of the base 100. In other implementations, however, a greater portion of each duct may extend into the interior 105.

One or more fiber optic cables 180 may be routed into the interior 105 of the base 100 through one or more of the cable ports 109. To inhibit the ingress of contaminants (e.g., dirt, water, etc.) and pests (e.g., insects, rodents, etc.) into the base 100, the cable ports 109 are sealed around the cables 180. In accordance with some aspects of the disclosure, seal block assemblies may be used to seal the cable ports 109. In general, seal blocks include a gasket that activates (e.g., performs sealing functions) upon compression. In one example implementation, the gasket includes a gel-based gasket. In other implementations, however, other types of gaskets may be utilized.

Each seal block includes a gasket disposed between a first housing portion and a second housing portion. In some implementations, each housing portion is formed from an integral piece. In other implementations, each housing portion is formed from multiple pieces. An activation assembly selectively forces the first and second housing portions together to squeeze the gasket therebetween. Axial passages are provided through the housing portions and the gasket to allow optical fiber cables 180 to be routed through the seal block.

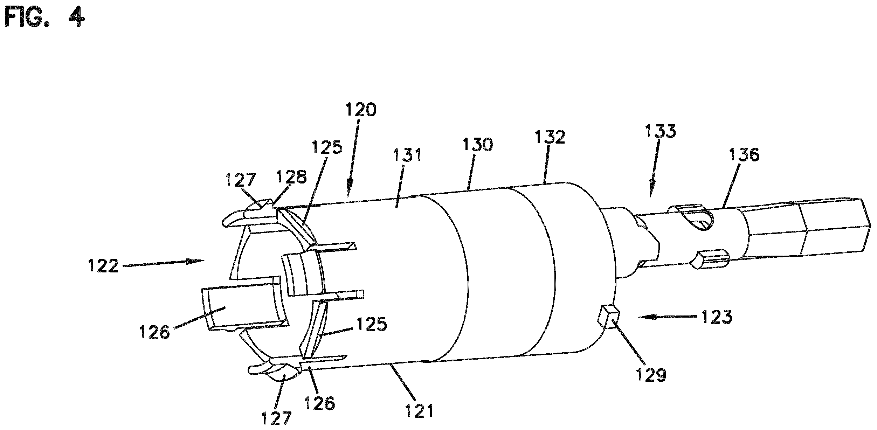

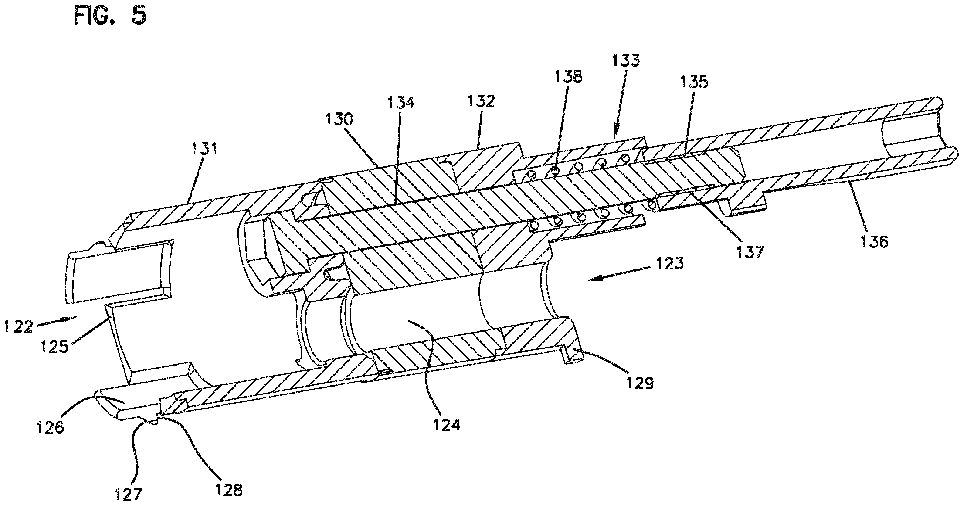

In the example shown in FIGS. 1-3, a first seal block assembly 120 is disposed within one of the ducts 110 at one of the cable ports 109. The first seal block assembly 120 is configured to fit within one of the round cable ports 109. As shown in FIG. 4, the first seal block assembly 120 includes a body 121 extending from a first end 122 to a second end 123. An axial passage 124 (FIG. 5) extends through the body 121 from the first end 122 to the second end 123. One or more optical fiber cables 180 may be routed through the axial passage 124. In some implementations, the axial passage 124 extends along a enter longitudinal axis of the body 121. In other implementations however, the axial passage 124 may be offset from the center (e.g., see FIG. 5).

One or more stop surfaces (e.g., shoulders, notches, lips, etc.) 125 are disposed at the first end 122 of the body 121. In some implementations, the stop surfaces 125 are formed by the edge of the first end 122 of the seal block assembly 120. In other implementations, the stop surfaces 125 are notched surfaces offset from the edge of the first end 122. For example, the stop surfaces may define circumferentially spaced shoulders cut into an exterior surface of the seal block body 121 at the first end 122. In certain implementations, one or more tabs 129 are disposed at the second end 123 of the body 121.

The seal block assembly body 121 also includes a latching arrangement to secure the body 121 at the cable port 109. In the example shown, the latching arrangement includes one or more flexible fingers 126 at the first end 122 of the body 121. A ramp 127 and a shoulder 128 are disposed on an external surface of each flexible finger 126. In certain implementations, the flexible fingers 126 extend axially from the first end 122 of the body 121 past the stop surface 125. In the example shown, four latching fingers 126 extend from circumferentially spaced locations at the first end 122 of the body 121. In other implementations, however, the body 121 may have a greater or lesser number of latching fingers 126.

The seal block body 121 is configured to seal a cable port 109 when plugged into the cable port 109. In the example shown, the seal block body 121 includes a gasket 130 (e.g., a gel structure, a foam structure, a rubber structure, etc.) sandwiched between a first body portion and a second body portion. In the example shown, the first body portion includes an integral body piece 131 and the second body portion includes a second integral body piece 132. An activation assembly 133 holds the body pieces 131, 132 together and selectively axially compresses the gasket 130 therebetween to activate the seal.

In the example shown in FIG. 5, the activation assembly 133 includes a screw 134 having a threaded region 135, a grip 136 having a threaded region 137, and a spring 138. The screw 134 extends axially through the gasket 130. A first end of the screw 134 is secured to the first body piece 131 and a second end of the screw 134 protrudes from the second body piece 132. The threaded region 137 of the grip 136 cooperates with the threaded region 135 of the screw 134 to telescopically mount the grip 136 to the second end of the screw 134. The spring 138 is mounted over the screw 134 so that tightening the grip 136 on the screw 134 compresses the spring 138. As the spring 138 is compressed, the spring 138 exerts a greater axial bias on the gasket 130 (see FIG. 5).

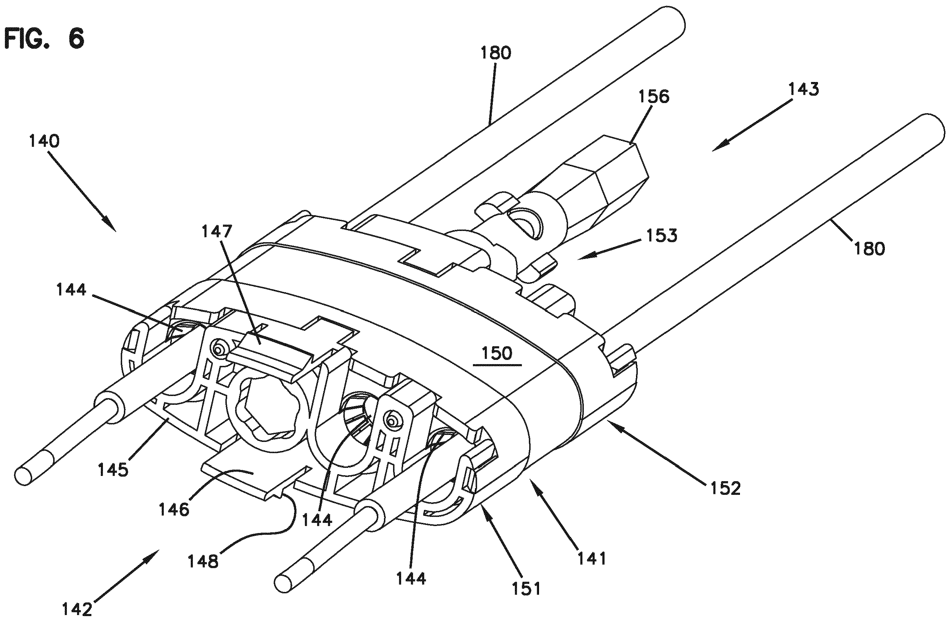

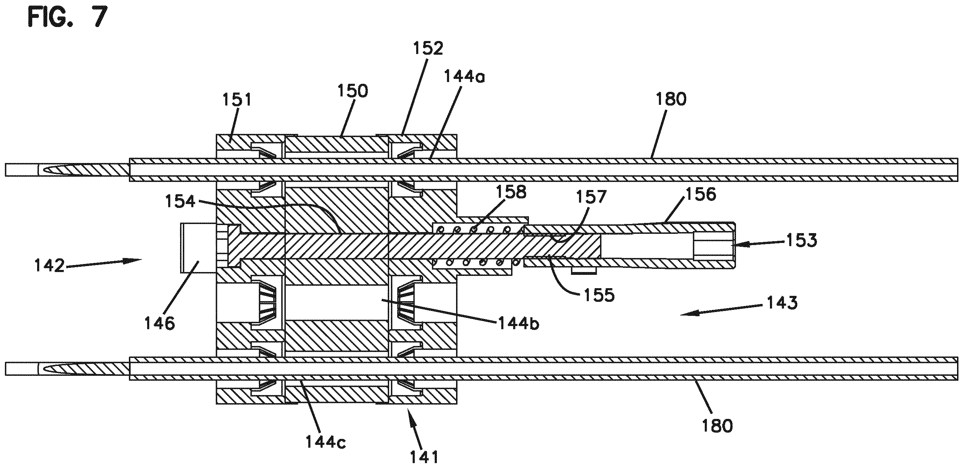

A second seal block assembly 140 is disposed within another of the ducts 110 at one of the cable ports 109. As shown in FIG. 6, the second seal block assembly 140 is configured to fit within the oblong cable port 109. The second seal block assembly 140 includes a body 141 extending from a first end 142 to a second end 143. One or more axial passages 144 (FIG. 7) extend through the body 141 from the first end 142 to the second end 143. One or more optical fiber cables 180 may be routed through each of the axial passage 144. In the example shown, a first axial passage 144a extends along a first side of the body 141, a second axial passage 144b extends along an intermediate region of the body 141, and a third axial passage 144c extends along a second side of the body 141 opposite the first side. In other implementations however, the body 141 may include a greater or lesser number of axial passages 144 or may have a different configuration of axial passages.

The first end 142 of the body 141 defines a first stop surface 145. The seal block assembly body 141 also includes a latching arrangement to secure the body 141 at the respective cable port 109. In the example shown, the latching arrangement includes one or more flexible fingers 146 at the first end 142 of the body 141. A ramp 147 and a shoulder 148 are disposed on an external surface of each flexible finger 146. In certain implementations, the flexible fingers 146 extend axially from the first end 142 of the body 141 past the first stop surface 145. In the example shown, one latching finger 146 extends from each of the elongated sides of the body 141. In other implementations, however, the body 141 may include a greater or lesser number of latching fingers 146.

The seal block body 141 is configured to seal a cable port 109 when plugged into the respective duct 110. In the example shown, the seal block body 141 includes a gasket 150 (e.g., a gel structure, a foam structure, a rubber structure, etc.) sandwiched between a first body portion and a second body portion. In the example shown, the first body portion includes a first body assembly 151 and the second body portion includes a second body assembly 152. In certain implementations, each of the body assemblies 151, 152 include two or more sections that cooperate to define the axial passages 144. The sections of the body assemblies 151, 152 may be separated to load the fiber optic cables within the body assemblies 151, 152 (e.g., see FIG. 7).

An activation assembly 153 holds the body assemblies 151, 152 together and selectively axially compresses the gasket 150 therebetween to activate the seal. In the example shown in FIG. 7, the activation assembly 153 includes a screw 154 having a threaded region 155, a grip 156 having a threaded region 157, and a spring 158. The screw 154 extends axially through the gasket 150. A first end of the screw 154 is secured to the first body assembly 151 and a second end of the screw 154 protrudes from the second body assembly 152. The threaded region 157 of the grip 156 cooperates with the threaded region 155 of the screw 154 to telescopically mount the grip 156 to the second end of the screw 154. The spring 158 is mounted over the screw 154 so that tightening the grip 156 on the screw 154 compresses the spring 158. As the spring 158 is compressed, the spring 158 exerts a greater axial bias on the gasket 150 (see FIG. 7).

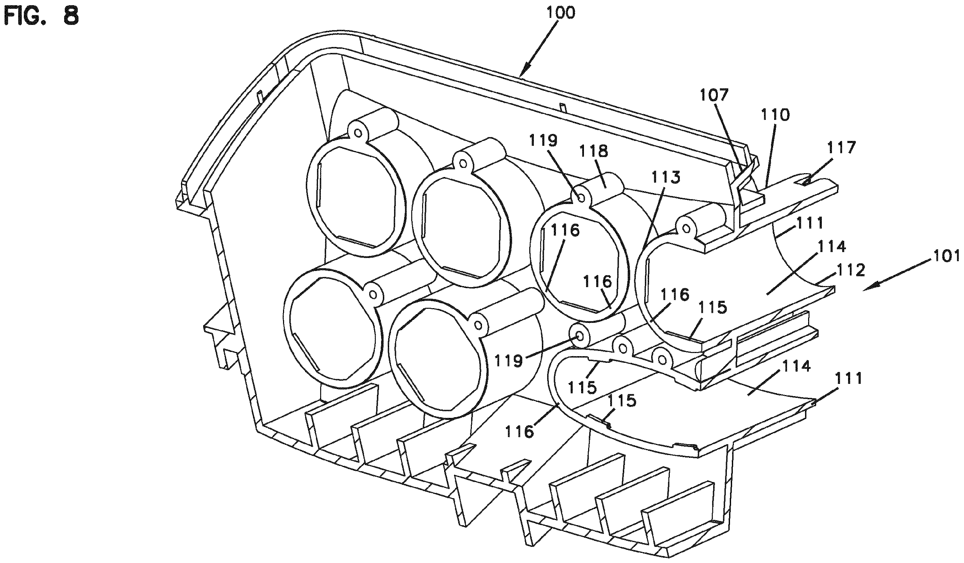

FIG. 8 illustrates the front end 101 of the enclosure base 100 from the interior 105 of the base 100. As noted above, the first end 101 defines multiple ports 109 leading into the interior 105 of the base 100. In the example shown, the first end 101 defines a first row of round ports 109 and a second row of round and oblong ports 109. In other implementations, the ports 109 may by arranged in any desired configuration.

In the example shown, the ports 109 are defined by ducts 110 extending into and out of the base 100. Each duct 110 includes an elongated boy 111 extending from an outer end 112 to an inner end 113. Each elongated body 111 defines an axial passage 114 extending from the outer end 112 to the inner end 113. The inner end 113 of the elongated body 111 defines a shoulder 116 that faces the interior 105 of the base 100. In the example shown, the shoulder 116 extends around the circumference of the inner end 113. In other implementations, however, the shoulder 116 may be broken/interrupted along the circumference.

One or more stops 115 are disposed at the inner end 113 of the elongated body 111 and extend into the passage 114. In the example shown, four circumferentially spaced stops 115 extend inwardly at the inner end 113 of each elongated body 111. In other implementations, however, a greater or lesser number of stops 115 may extend inwardly from the elongated body 111. In certain implementations, one or more of the elongated bodies 111 may define one or more slots 117 at the outer end 112 of the elongated body 111. In the example shown, the outer end 112 defines a single slot that is useful for aligning the seal block assembly 120 at the duct 110.

One or more fastener supports 118 may be disposed at the inner ends 113 of the ducts 110. Each fastener support 118 defines a fastener hole 119 accessible from the interior 105 of the base 100. The fastener supports 118 aid in securing the optical fiber cables 180 separate from the seal blocks 120, 140 as will be discussed in more detail herein.

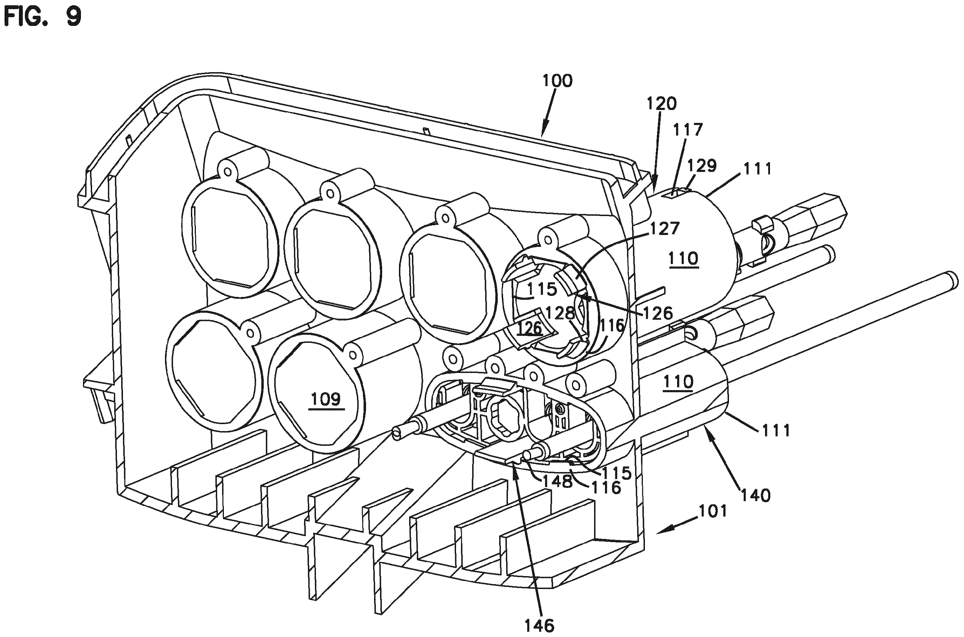

FIG. 9 shows the example seal blocks 120, 140 secured at respective cable ports 109. Each seal block 120, 140 is inserted through the axial passage 114 defined by the elongated body 111 of the duct 110 installed at the respective cable port 109. The first end 122, 142 of each seal block body 121, 141 is inserted through the outer end 112 of each duct and pushed towards the inner end 113 until the stop surfaces 125, 145 of each seal block body 121, 141 abuts the stops 115 of the respective duct 110. The stops 115 inhibit the seal block bodies 121, 141 from being pushed too far into the base 100.

As the seal block body 121, 141 is pushed toward the inner end 113 of the duct 110, the latching fingers 126 cam inwardly to pass the inner end 113 and snap over the shoulder 116 of the duct body 111. The shoulder 128, 148 of the latching fingers 126, 146 abuts the shoulder 116 of the duct body 111 to inhibit the seal block bodies 121, 141 from being pulled out of the ducts 110. Accordingly, a user need not separately fasten (e.g., with screws) the seal blocks 120, 140 to the base 100. Merely pushing the seal blocks 120, 140 into position secures the seal blocks 120, 140 to the base 100. The latching fingers 126 are manually releasable by compressing the latching fingers 126 inwardly until the shoulders 128, 148 clear the inner shoulder 116 of the ducts 110.

In certain implementations, the duct bodies 111 include alignment structures that facilitate mounting the seal blocks in accordance with a preferred orientation. For example, the slot 117 at the outer end 112 of the round ducts 110 may be sized and shaped to receive the tab 129 disposed at the second end 123 of the first seal block body 121. In other implementations, the tab 129 also aids in inhibiting the seal block body 121 from being inserted too far into the duct 110. In still other implementations, one or more tabs may be disposed on the oblong seal block 140.

The gasket 130, 150 of each seal block 120, 140 is spaced towards the exterior of the base 100 from the point at which the seal block 120, 140 is axially fixed to the base 100. In some implementations, the stops 115 and/or tab 129 aid in maintaining the seal block 120, 140 within the ducts 110 when pressure is applied to the seal block 120, 140 from outside the base 100. External pressure applied to the seal block 120, 140 will further compress the gasket 130, 150 axially since the stops 115 and/or tab 129 maintain the seal block 120, 140 in a fixed axial position.

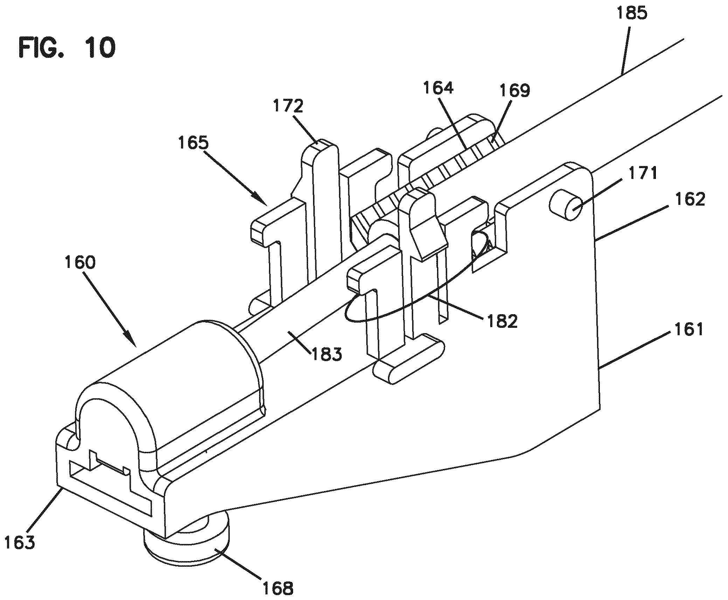

In accordance with some aspects, the optical fiber cables 180 may be secured to the base 100 separate from the seal blocks 120, 140 using fixation mounts 160 (FIG. 10). A fixation mount 160 is coupled to an optical fiber cable 180 at a location where one or more strength members have been terminated (e.g., trimmed). The fixation mount 160 is coupled to an interior 105 of the base 100. For example, the fixation mount 160 may be coupled to the inner surface of the first end 101 of the base 100. In certain implementations, the fixation mount 160 axially fixes the cable 180 relative to the base 100. In certain implementations, the fixation mount 160 torsionally fixes the cable 180 relative to the base 100. In certain implementations, the fixation mount 160 laterally fixes the cable 180 relative to the base 100. Accordingly, stress applied to the cables 180 is not transferred to the seal blocks 120, 140 and, hence, does not affect the seal at the respective port 109.

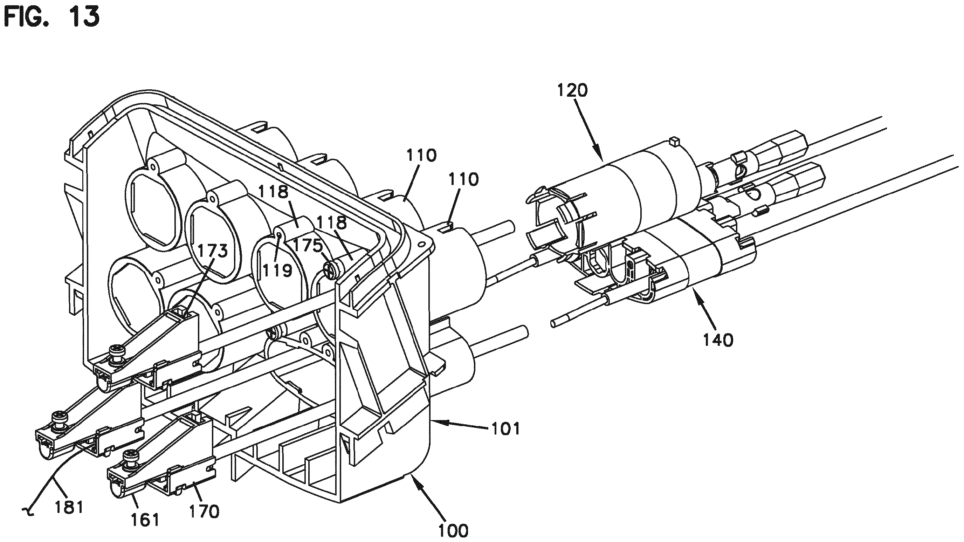

The fiber optic cables 180 include one or more optical fibers 181 (FIG. 13) and at least one strength member. In certain implementations, the optical fibers 181 are contained within a buffer tube. A jacket 185 is stripped or otherwise removed at a section of the cable that is to be secured to the enclosure. Stripping the jacket 185 reveals the optical fiber(s) 181 and one or more strength members. The strength members may be terminated (e.g., trimmed) at or near the stripped region. In certain implementations, the strength members include a plurality of strength yarns (e.g., aramid yarn, such as Kevlar®) 182. In certain implementations, the strength members include a tensile strength member (e.g., a fiberglass rod) 183 in addition to the strength yarns 182. In other implementations, the strength members include a tensile strength member (e.g., a fiberglass rod) 183 instead of the strength yarns 182.

In some implementations, the seal blocks 120, 140 are loaded onto the optical cables 180 before the fixation assemblies 160 are coupled to the optical cables 180. For example, the fixation assemblies 160 may be sized so that a fixation assembly 160 does not fit easily through the axial passages 124, 144 defined by the seal blocks 120, 140. Indeed, some fixation assemblies 160 may not fit at all through the axial passages 124, 144 of the certain example types of seal blocks 120, 140.

In certain implementations, the optical cables 180 are routed through the passages 124, 144 of the seal blocks 120, 140 before being stripped (e.g., while the jacket 185 still covers the optical fibers 181 and strength members 182, 183). For example, an optical cable 180 may be routed axially through the passage 124 of the round-type seal block 120. In other implementations, however, an optical cable 180 may be routed radially into the passage 144 of the oblong-type seal block 140.

FIGS. 10-12 illustrate one example fixation mount 160. The fixation assembly 160 includes a body 161 extending from a first end 162 to a second end 163. The body 161 defines an axial channel 164 that extends at least partially between the first and second ends 162, 163. In some implementations, the axial channel 164 has a ribbed (e.g., laterally ribbed) or otherwise textured surface. A fiber optic cable 180 may be routed along the channel 164 from the first end 162 towards the second end 163. The textured surface may aid in holding the cable 180 against axial and/or torsional strain. In certain implementations, a sizing flange 169 may be positioned in the channel 164 to accommodate various sizes of optical fiber cables 180 (i.e., optical cables having various diameters). In some such implementations, the sizing flange 169 has a ribbed (e.g., laterally ribbed) or otherwise textured surface. The textured surface of the sizing flange 169 may aid in holding the cable 180 against axial and/or torsional strain.

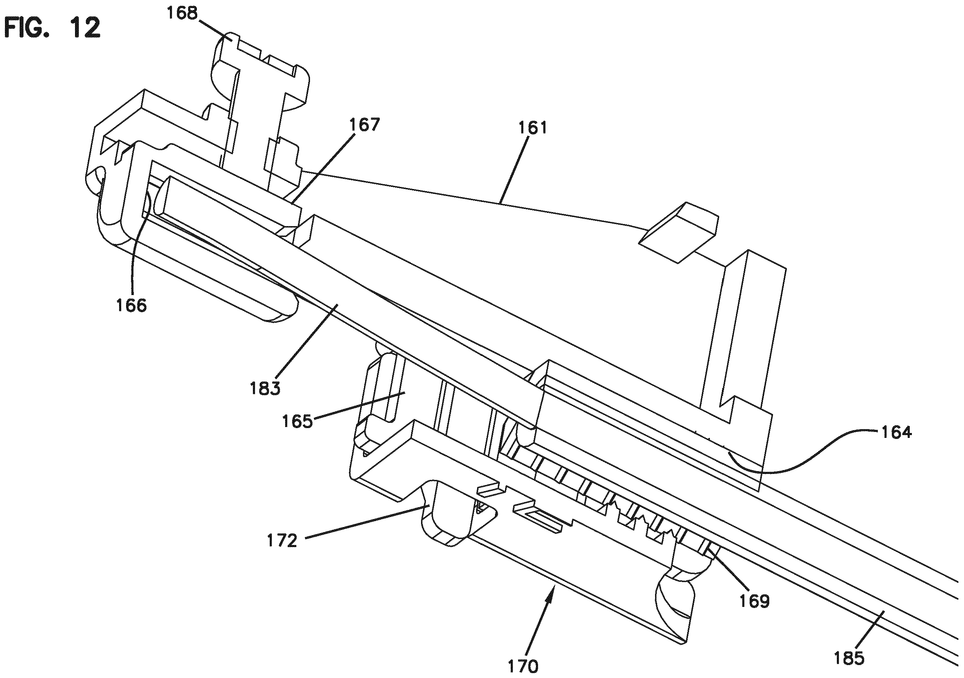

A cover 170 is configured to selectively mount to the body 161 to close the channel 164, thereby enclosing a portion of the fiber optic cable 180 (see FIG. 12). In certain implementations, the cover 170 is pivotally coupled to the body 161 (e.g. using hinge arrangement 171). In certain implementations, the cover 170 latches to the body 161 using latch arrangement 172. In the example shown in FIG. 10, the latch arrangement 172 includes two latching fingers extending upwardly from the body 161 adjacent the channel 164. The cover 170 may be latched to the body 161 after being pivoted to the closed position. In other implementations, the cover 170 may be otherwise secured to the body 161.

The jacket 185 of the optical cable 180 terminates at an intermediate position within the fixation body 161. The optical fibers 181 and strength members extend past the jacket 185 towards the second end 163 of the body 161. The strength members may be trimmed at a location spaced from the jacket 185. In some implementations, the jacketed cable 180 extends through the axial channel 164 of the body 161. In such implementations, the cover 170 cooperates with the channel 164 (or sizing flange 169) to enclose the jacketed portion of the cable 180. In certain implementations, the cover 170 and the channel 164 (or sizing flange 169) cooperate to radially compress the jacketed portion of the cable 180.

The fixation assemblies 160 are configured to retain the strength members of the optical fiber cables 180. In some implementations, the cable fixation body 161 includes a winding arrangement 165 at which the strength yarns 182 may be wound or otherwise retained. In the example shown, the winding arrangement 165 includes four L-shaped flanges that extend upwardly from the fixation body 161 (see FIG. 10). In various implementations, the strength yarns may be wound around the flanges in a variety of configurations (e.g., an X-pattern, an L-pattern, or an O-pattern). In other implementations, the winding arrangement 165 may have a greater or lesser number of flanges or have flanges of different shapes.

In some implementations, the fixation body 161 includes an enclosing structure defining a first pocket 166 at which the tensile strength member 183 may be retained. The first pocket 166 is located at the second end 163 of the body 161. In some implementations, the first pocket 166 is axially aligned with the channel 164 of the body 161. In other implementations, the first pocket 166 is radially offset from the channel 164 (e.g., see FIG. 12) so that the tensile strength member 183 flexes radially away from the channel 164 when routed to the first pocket 166. The first pocket 166 is sized to receive the tensile strength member 183 and still allow the optical fibers 181 to extend past the first pocket 166 (see FIG. 13).

The pocket 166 is defined at least partially by a flexible flange 167 that is configured to flex selectively into the pocket 166. In certain implementations, a tightening member 168 is configured to apply a force to the flange 167 that directs the flange 167 into the first pocket 166. The force may be increased to move the flange 167 into the first pocket 166 and decreased to allow the flange 167 to move out of (or to extend flush with) the first pocket 166. In the example shown, the tightening member 168 includes a set screw 168 that is mounted at a screw hole located above the flange 167.

The flexible flange 167 radially compresses the strength member 183 to aid in retaining the strength member 183 in the first pocket 166. By applying the inward force with the flange 167 instead of the tightening member 168, itself, the radial compression is spread out along a greater surface area of the strength member 183, decreasing the chances of crushing or breaking the strength member 183.

The flexible flange 167 and tightening member 168 of the fixation device 160 cooperate to accommodate tensile strength members 183 of various sizes. To accommodate a tensile strength member 183 having a small diameter, the tightening member 168 is screwed or otherwise moved towards the flange 167 to press the flange 167 into the first pocket 166. To accommodate a tensile strength member 183 having a larger diameter, the tightening member 168 is unscrewed or otherwise moved away from the flange 167, thereby allowing the flange 167 to unflex and bend away from the first pocket 166.

The fixation mount bodies 161 also are configured to secure to the interior of the base 100. In some implementations, the fixation assemblies 160 are coupled to the fiber optic cables 180 before routing the cables 180 through the ports 109. In such implementations, the fixation bodies 161 and stripped regions of the optical cables 180 are routed through the ducts 110 from an exterior of the base 100 into the interior 105 of the base 100. In other implementations, however, the fixation assemblies 160 may be coupled to the optical cables 180 after the cables 180 are routed through the ports 109.

As shown in FIG. 13, one or more fastener supports 118 are disposed at the inner ends 113 of the ducts 110. Each fastener support 118 defines a fastener hole 119 accessible from the interior 105 of the base 100. Each fastener hole 119 is located outside of a perimeter of the axial passage 114 extending through the respective duct 110 (e.g., see FIGS. 8 and 9). A mounting member 175 is secured in each fastener hole 119 at which a fixation assembly 160 is to be secured. In the example shown, the mounting member 175 includes a screw. In some implementations, mounting members 175 may be preinstalled in one or more of the fasteners holes 119 in the factory or other manufacturing facility. In other implementations, the mounting members 175 may be added during the installation of the cables 180 to be secured.

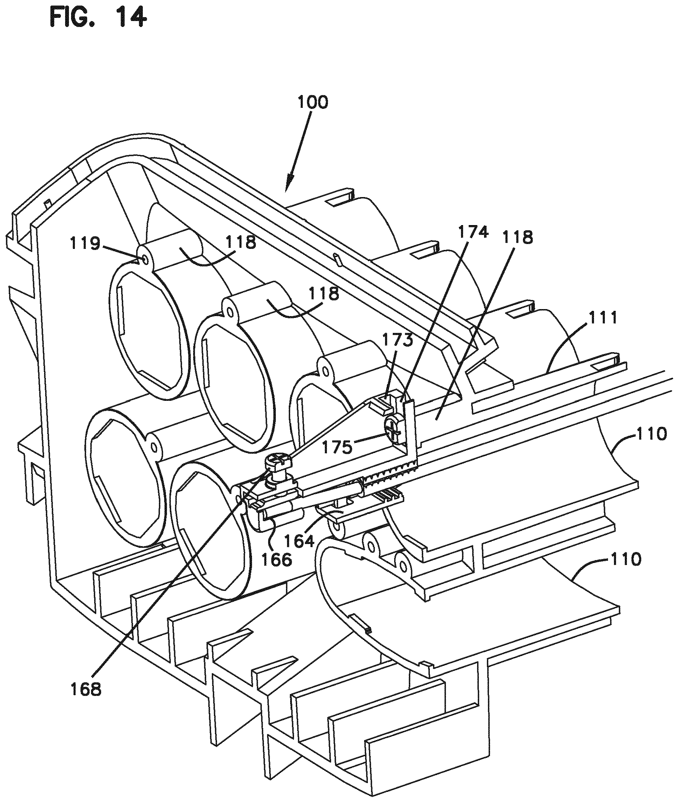

As shown in FIG. 14, the body 161 of each fastening assembly 160 defines a second pocket 173 at the first end 162 of the body 161. To secure the fixation assembly 160 to the base 100, the fixation assembly 160 is positioned so that the mounting member 175 is disposed within the second pocket 173. For example, the fixation assembly 160 may be moved laterally relative to the ports 109 to slide the mounting member 175 into the second pocket 173. The mounting member 175 may be tightened to clamp the fixation assembly 160 between the screw head and the fastener support 118, thereby axially securing the fixation assembly 160 to the base 100.

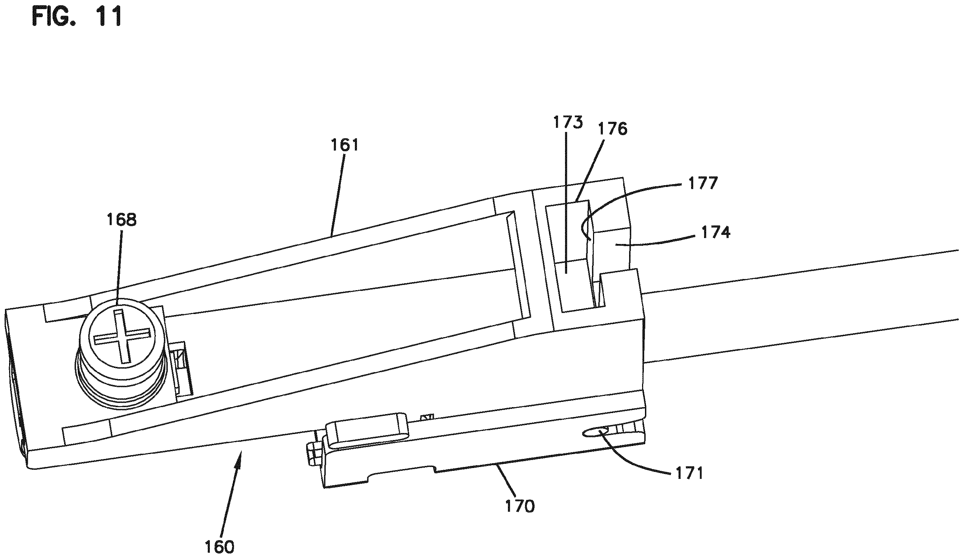

As shown in FIG. 11, the second pocket 173 is sized to accommodate the head of the mounting screw 175. The second pocket 173 has an open face 176 that extends generally parallel to the channel 164 of the fixation body 161. The open face 176 is sized to enable the head of the mounting screw 175 to pass into the second pocket 173. The fixation body 161 also defines a slot 174 extending through a wall defining the second pocket 173. The slot 174 is sized to enable the body of the screw 175 to extend therethrough. In the example shown, the slot 174 and the open face 176 define a T-shaped profile. An inner surface of the second pocket 173 forms shoulders 177 at opposite sides of the slot 174. When the mounting member 175 is tightened, the head of the mounting member 175 axially compresses against the shoulders 177 (see FIG. 14).

When coupled to the cables 180, the seal block assemblies 120, 140 and the fixation assemblies 160 cooperate to form cable port assemblies 190 (FIG. 15). In some implementations, the seal blocks 120, 140 are slid into the ducts 110 to seal the cable ports 109 after the fixation assemblies 160 are secured to the first end 101 of the base 100. In other implementations, the seal blocks 120, 140 may be slid into the ducts 110 after the fixation assemblies 160 are routed through the ducts 110, but before the fixation assemblies 160 are secured to the base 100.

Having described the preferred aspects and embodiments of the present invention, modifications and equivalents of the disclosed concepts may readily occur to one skilled in the art. However, it is intended that such modifications and equivalents be included within the scope of the claims which are appended hereto.

### Parts List

- 100: base
- 101: first end
- 102: second end
- 103: first side
- 104: second side
- 105: interior
- 106: sidewall
- 107: gasket channel
- 108: base
- 109: ports
- 110: ducts
- 111: elongated body
- 112: outer end
- 113: inner end
- 114: passage
- 115: stops
- 116: inner shoulder
- 117: outer slot
- 118: fastener support
- 119: fastener hole
- 120: first example seal block
- 121: body
- 122: first end
- 123: second end
- 124: axial passage
- 125: stop surface
- 126: flexible finger
- 127: ramp
- 128: shoulder
- 129: rear tab
- 130: gasket
- 131: first piece
- 132: second piece
- 133: activation assembly
- 134: screw
- 135: threaded surface
- 136: grip
- 137: threaded surface
- 138: spring
- 140: second example seal block
- 141: body
- 142: first end
- 143: second end
- 144: axial passages
- 145: front stop surface
- 146: flexible finger
- 147: ramp
- 148: shoulder
- 150: gasket
- 151: first body assembly
- 152: second body assembly
- 153: activation assembly
- 154: screw
- 155: threaded surface
- 156: grip
- 157: threaded surface
- 158: spring
- 160: cable fixation assembly
- 161: body
- 162: first end
- 163: second end
- 164: channel
- 165: winding arrangement
- 166: first pocket
- 167: flexible flange
- 168: set screw
- 169: sizing flange
- 170: cover
- 171: hinge member
- 172: latching arrangement
- 173: second pocket
- 174: slot
- 175: mounting screw
- 176: open front
- 177: shoulders
- 180: fiber optic cables
- 181: optical fibers
- 182: yarn
- 183: strength member
- 185: jacket
- 190: cable port assembly

## Claims

1. An enclosure arrangement comprising:
a base (100) defining at least one cable port (109) at a first end (101), the cable port (109) leading from an exterior of the base (100) to an interior (105) of the base (100);
a duct (110) extending through the at least one cable port (109) and defining an axial passage (114) therethrough;
a cable fixation assembly (160) coupled to an optical fiber cable (180), the cable fixation assembly (160) retaining at least one strength member (182, 183) of the optical fiber cable (180); and
a seal block assembly (120, 140) disposed in the duct (110), the seal block assembly (120, 140) defining an axial passage (114) through which the optical fiber cable (180) passes, the seal block assembly (120, 140) being secured to the duct (110), the seal block assembly (120, 140) being latched to the interior end of the duct (110), the seal block assembly (120, 140) extending from a first end to a second end, and wherein the seal block assembly (120, 140) includes:
a first housing portion (131, 151) that extends from a first end (122, 142) to a second end (123, 143) and defines at least one axial passage extending therebetween, the first housing portion (131, 151) forming the first end of the seal block assembly (120, 140;
a second housing portion (132, 152) that defines at least one axial passage;
**characterized in that** the duct (110) includes stops (115) extending inwardly into the axial passage (114) at an interior end of the duct (110); and the seal block assembly (120, 140) also includes:
a gasket (130, 150) disposed between the first housing portion (131, 151) and the second housing portion (132, 152), the gasket (130, 150) defining at least one axial passage that aligns with the at least one axial passage of the first housing portion (131, 151) and the at least one axial passage of the second housing portion (132, 152); and
an activation assembly (133, 153) that axially compresses the gasket (130, 150) when actuated;
wherein the first end (122, 142) of the first housing portion (131, 151) defines a stop surface (125, 145) and including at least one latching finger (126, 146) extending outwardly past the stop surface (125, 145) in an axial direction.

2. The enclosure arrangement of claim 1, wherein the duct (110) has a round lateral cross-sectional profile.

3. The enclosure arrangement of claim 1, wherein the duct (110) has an oblong lateral cross-sectional profile.

4. The enclosure arrangement of claim 1, wherein the base (100) defines at least one additional cable port (109) at the first end (101), the additional cable port (109) also leading from the exterior of the base (100) to the interior (105) of the base (100); and wherein the enclosure arrangement further comprises:
at least one additional duct (110) extending through the additional cable port (109) and defining an axial passage (114) therethrough, the additional duct (110) including stops (115) extending inwardly into the axial passage (114) at an interior end of the additional duct (110).

5. The enclosure arrangement of claim 4, wherein the duct (110) has a round lateral cross-sectional profile and the additional duct (110) has an oblong lateral cross-sectional profile.

6. The enclosure arrangement of claims 1-5, wherein the gasket (130, 150) includes a gel-type gasket (130, 150).

7. The enclosure arrangement of claims 1-6, wherein the activation assembly (133, 153) includes a screw (134, 154), a grip (136, 156), and a spring (138, 158), the screw (134, 154) extending through the gasket (130, 150) and securing to the first housing portion (131, 151), the grip (136, 156) having a first end that threads onto the screw (134, 154) and a second end that protrudes from the second housing portion (132, 152), the spring (138, 158) being positioned between the gasket (130, 150) and the grip (134, 154), the spring (138, 158) being compressed when the screw (134, 154) and grip (136, 156) are tightened together, the spring (138, 158) applying an axial bias to the gasket (130, 150) when the spring (138, 158) is compressed.

8. The enclosure arrangement of claims 1-7, wherein the at least one latching finger (126, 146) includes a plurality of latching fingers (126, 146) that are circumferentially spaced around the first end of the first housing portion (131, 151).

9. The enclosure arrangement of claim 8, wherein the plurality of latching fingers (126, 146) includes four latching fingers (126, 146).

10. The enclosure arrangement of claim 1,
wherein the cable fixation assembly (160) is moveably mounted in a transverse direction relative to the axial passage (114).

11. The enclosure arrangement of claim 10, wherein the duct (110) has a round lateral cross-sectional profile.

12. The enclosure arrangement of claim 10, wherein the duct (110) has an oblong lateral cross-sectional profile.

13. The enclosure arrangement of claim 10, wherein the base (100) defines at least one additional cable port (109) at the first end (101), the additional cable port (109) also leading from the exterior of the base (100) to the interior (105) of the base (100); and wherein the enclosure arrangement further comprises:
at least one additional duct (110) extending through the additional cable port (109) and defining an axial passage (114) therethrough, the additional duct (110) including stops (115) extending inwardly into the axial passage (114) at an interior end of the additional duct (110).

14. The enclosure arrangement of claim 13, wherein the duct (110) has a round lateral cross-sectional profile and the additional duct (110) has an oblong lateral cross-sectional profile.

15. The enclosure arrangement of claims 10-14, wherein the seal block assembly (120, 140) is latched to the interior end of the duct (110).

## Patentansprüche

1. Gehäuseanordnung, aufweisend:
eine Basis (100), die mindestens einen Kabelport (109) an einem ersten Ende (101) definiert, wobei der Kabelport (109) von einer Außenseite der Basis (100) zu einer Innenseite (105) der Basis (100) führt;
einen Kanal (110), der durch den mindestens einen Kabelport (109) verläuft und einen axialen Durchgang (114) dort hindurch definiert;
eine Kabelbefestigungsbaugruppe (160), die an ein Glasfaserkabel (180) gekuppelt ist, wobei die Kabelbefestigungsbaugruppe (160) mindestens ein Stärkeglied (182, 183) des Glasfaserkabels (180) hält; und
eine Abdichtungsblockbaugruppe (120, 140), die im Kanal (110) angeordnet ist, wobei die Abdichtungsblockbaugruppe (120, 140) einen axialen Durchgang (114) definiert, den das Glasfaserkabel (180) durchläuft, wobei die Abdichtungsblockbaugruppe (120, 140) am Kanal (110) befestigt ist, die Abdichtungsblockbaugruppe (120, 140) an das Innenseitenende des Kanals (110) angeklinkt ist, die Abdichtungsblockbaugruppe (120, 140) von einem ersten Ende zu einem zweiten Ende verläuft, und wobei die Abdichtungsblockbaugruppe (120, 140) Folgendes enthält:
einen ersten Einfassungsabschnitt (131, 151), der von einem ersten Ende (122, 142) zu einem zweiten Ende (123, 143) verläuft und mindestens einen axialen Durchgang definiert, welcher dazwischen verläuft, wobei der erste Einfassungsabschnitt (131, 151) das erste Ende der Abdichtungsblockbaugruppe (120, 140) ausbildet;
einen zweiten Einfassungsabschnitt (132, 152), der mindestens einen axialen Durchgang definiert;
**dadurch gekennzeichnet, dass** der Kanal (110) Anschläge (115) enthält, die an einem Innenseitenende des Kanals (110) nach innen in den axialen Durchgang (114) verlaufen; und wobei die Abdichtungsblockbaugruppe (120, 140) außerdem Folgendes enthält:
eine Dichtung (130, 150), die zwischen dem ersten Einfassungsabschnitt (131, 151) und dem zweiten Einfassungsabschnitt (132, 152) angeordnet ist, wobei die Dichtung (130, 150) mindestens einen axialen Durchgang definiert, der am mindestens einen axialen Durchgang des ersten Einfassungsabschnitts (131, 151) und am mindestens einen axialen Durchgang des zweiten Einfassungsabschnitts (132, 152) ausgerichtet ist; und
eine Aktivierungsbaugruppe (133, 153), die die Dichtung (130, 150) axial zusammendrückt, wenn sie aktiviert wird;
wobei das erste Ende (122, 142) des ersten Einfassungsabschnitts (131, 151) eine Anschlagfläche (125, 145) definiert und mindestens einen Klinkenfinger (126, 146) enthält, der an der Anschlagfläche (125, 145) in einer axialen Richtung nach außen verläuft.

2. Gehäuseanordnung nach Anspruch 1, wobei der Kanal (110) ein rundes seitliches Querschnittprofil aufweist.

3. Gehäuseanordnung nach Anspruch 1, wobei der Kanal (110) ein längliches seitliches Querschnittprofil aufweist.

4. Gehäuseanordnung nach Anspruch 1, wobei die Basis (100) mindestens einen zusätzlichen Kabelport (109) am ersten Ende (101) definiert, wobei der zusätzliche Kabelport (109) ebenfalls von der Außenseite der Basis (100) zur Innenseite (105) der Basis (100) verläuft; und wobei die Gehäuseanordnung ferner Folgendes aufweist:
mindestens einen zusätzlichen Kanal (110), der durch den zusätzlichen Kabelport (109) verläuft und einen axialen Durchgang (114) dort hindurch definiert, wobei der zusätzliche Kanal (110) Anschläge (115) enthält, die an einem Innenseitenende des zusätzlichen Kanals (110) nach innen in den axialen Durchgang (114) verlaufen.

5. Gehäuseanordnung nach Anspruch 4, wobei der Kanal (110) ein rundes seitliches Querschnittprofil aufweist und der zusätzliche Kanal (110) ein längliches seitliches Querschnittprofil aufweist.

6. Gehäuseanordnung nach einem der Ansprüche 1 bis 5, wobei die Dichtung (130, 150) eine gelartige Dichtung (130, 150) enthält.

7. Gehäuseanordnung nach einem der Ansprüche 1 bis 6, wobei die Aktivierungsbaugruppe (133, 153) eine Schraube (134, 154), einen Griff (136, 156) und eine Feder (138, 158) enthält, wobei die Schraube (134, 154) durch die Dichtung (130, 150) verläuft und den ersten Einfassungsabschnitt (131, 151) befestigt, der Griff (136, 156) ein erstes Ende, das auf die Schraube (134, 154) aufgeschraubt ist, und ein zweites Ende aufweist, das vom zweiten Einfassungsabschnitt (132, 152) vorsteht, die Feder (138, 158) zwischen der Dichtung (130, 150) und dem Griff (134, 154) angeordnet ist, wobei die Feder (138, 158) zusammengedrückt wird, wenn die Schraube (134, 154) und der Griff (136, 156) aneinander angezogen werden, wobei die Feder (138, 158) eine axiale Vorspannung auf die Dichtung (130, 150) ausübt, wenn die Feder (138, 158) zusammengedrückt wird.

8. Gehäuseanordnung nach einem der Ansprüche 1 bis 7, wobei der mindestens eine Klinkenfinger (126, 146) mehrere Klinkenfinger (126, 146) enthält, die umfänglich um das erste Ende des ersten Einfassungsabschnitts (131, 151) beabstandet sind.

9. Gehäuseanordnung nach Anspruch 8, wobei die mehreren Klinkenfinger (126, 146) vier Klinkenfinger (126, 146) beinhalten.

10. Gehäuseanordnung nach Anspruch 1, wobei die Kabelbefestigungsbaugruppe (160) beweglich in einer Querrichtung bezüglich des axialen Durchgangs (114) angebracht ist.

11. Gehäuseanordnung nach Anspruch 10, wobei der Kanal (110) ein rundes seitliches Querschnittprofil aufweist.

12. Gehäuseanordnung nach Anspruch 10, wobei der Kanal (110) ein längliches seitliches Querschnittprofil aufweist.

13. Gehäuseanordnung nach Anspruch 10, wobei die Basis (100) mindestens einen zusätzlichen Kabelport (109) am ersten Ende (101) definiert, wobei der zusätzliche Kabelport (109) ebenfalls von der Außenseite der Basis (100) zur Innenseite (105) der Basis (100) verläuft; und wobei die Gehäuseanordnung ferner Folgendes aufweist:
mindestens einen zusätzlichen Kanal (110), der durch den zusätzlichen Kabelport (109) verläuft und einen axialen Durchgang (114) dort hindurch definiert, wobei der zusätzliche Kanal (110) Anschläge (115) enthält, die an einem Innenseitenende des zusätzlichen Kanals (110) nach innen in den axialen Durchgang (114) verlaufen.

14. Gehäuseanordnung nach Anspruch 13, wobei der Kanal (110) ein rundes seitliches Querschnittprofil aufweist und der zusätzliche Kanal (110) ein längliches seitliches Querschnittprofil aufweist.

15. Gehäuseanordnung nach einem der Ansprüche 10 bis 14, wobei die Abdichtungsblockbaugruppe (120, 140) an das Innenseitenende des Kanals (110) angeklinkt ist.

## Revendications

1. Agencement de boîtier comprenant :
une base (100) définissant au moins un orifice de câble (109) au niveau d'une première extrémité (101), l'orifice de câble (109) allant d'un extérieur de la base (100) jusqu'à un intérieur (105) de la base (100) ;
un conduit (110) s'étendant à travers le ou les orifices de câble (109) et définissant un passage axial (114) à travers ce dernier ;
un ensemble de fixation de câble (160) couplé à un câble à fibres optiques (180), l'ensemble de fixation de câble (160) retenant au moins un élément de renfort (182, 183) du câble à fibres optiques (180) ; et
un ensemble bloc de scellement (120, 140) disposé dans le conduit (110), l'ensemble bloc de scellement (120, 140) définissant un passage axial (114) à travers lequel le câble à fibres optiques (180) passe, l'ensemble bloc de scellement (120, 140) étant fixé au conduit (110), l'ensemble bloc de scellement (120, 140) étant verrouillé à l'extrémité intérieure du conduit (110), l'ensemble bloc de scellement (120, 140) s'étendant depuis une première extrémité jusqu'à une seconde extrémité et dans lequel l'ensemble bloc de scellement (120, 140) comprend :
une première partie de logement (131, 151) qui s'étend depuis une première extrémité (122, 142) jusqu'à une seconde extrémité (123, 143) et définit au moins un passage axial s'étendant entre ces dernières, la première partie de logement (131, 151) formant la première extrémité de l'ensemble bloc de scellement (120, 140) ;
une seconde partie de logement (132, 152) qui définit au moins un passage axial ;
**caractérisé en ce que** le conduit (110) comprend des arrêts (115) s'étendant vers l'intérieur dans le passage axial (114) au niveau d'une extrémité intérieure du conduit (110) ; et l'ensemble bloc de scellement (120, 140) comprend également :
un joint de scellement (130, 150) disposé entre la première partie de logement (131, 151) et la seconde partie de logement (132, 152), le joint de scellement (130, 150) définissant au moins un passage axial qui s'aligne sur le ou les passages axiaux de la première partie de logement (131, 151) et le ou les passages axiaux de la seconde partie de logement (132, 152) ; et
un ensemble d'activation (133, 153) qui comprime axialement le joint de scellement (130, 150) lorsqu'il est actionné ;
dans lequel la première extrémité (122, 142) de la première partie de logement (131, 151) définit une surface d'arrêt (125, 145) et comprenant au moins un doigt de verrouillage (126, 146) s'étendant vers l'extérieur au delà la surface d'arrêt (125, 145) dans une direction axiale.

2. Agencement de boîtier selon la revendication 1, dans lequel le conduit (110) présente un profil transversal latéral arrondi.

3. Agencement de boîtier selon la revendication 1, dans lequel le conduit (110) présente un profil transversal latéral oblong.

4. Agencement de boîtier selon la revendication 1, dans lequel la base (100) définit au moins un orifice de câble (109) supplémentaire au niveau de la première extrémité (101), l'orifice de câble (109) supplémentaire allant également de l'extérieur de la base (100) jusqu'à l'intérieur (105) de la base (100) ; et dans lequel l'agencement de boîtier comprend en outre :
au moins un conduit (110) supplémentaire s'étendant à travers l'orifice de câble (109) supplémentaire et définissant un passage axial (114) à travers ce dernier, le conduit (110) supplémentaire comprenant des arrêts (115) s'étendant vers l'intérieur dans le passage axial (114) au niveau d'une extrémité intérieure du conduit (110) supplémentaire.

5. Agencement de boîtier selon la revendication 4, dans lequel le conduit (110) présente un profil transversal latéral arrondi et le conduit (110) supplémentaire présente un profil transversal latéral oblong.

6. Agencement de boîtier selon les revendications 1 à 5, dans lequel le joint d'étanchéité (130, 150) comprend un joint d'étanchéité de type gel (130, 150).

7. Agencement de boîtier selon les revendications 1 à 6, dans lequel l'ensemble d'activation (133, 153) comprend une vis (134, 154), une prise (136, 156) et un ressort (138, 158), la vis (134, 154) s'étendant à travers le joint d'étanchéité (130, 150) et étant fixée à la première partie de logement (131, 151), la prise (136, 156) ayant une première extrémité qui s'enfile sur la vis (134, 154) et une seconde extrémité qui fait saillie depuis la seconde partie de logement (132, 152), le ressort (138, 158) étant positionné entre le joint d'étanchéité (130, 150) et la prise (134, 154), le ressort (138, 158) étant comprimé lorsque la vis (134, 154) et la prise (136, 156) sont vissées ensemble, le ressort (138, 158) appliquant une sollicitation axiale sur le joint d'étanchéité (130, 150) lorsque le ressort (138, 158) est comprimé.

8. Agencement de boîtier selon les revendications 1 à 7, dans lequel le ou les doigts de verrouillage (126, 146) comprennent une pluralité de doigts de verrouillage (126, 146) qui sont espacés circonférentiellement autour de la première extrémité de la première partie de logement (131, 151).

9. Agencement de boîtier selon la revendication 8, dans lequel la pluralité de doigts de verrouillage (126, 146) comprennent quatre doigts de verrouillage (126, 146).

10. Agencement de boîtier selon la revendication 1,
dans lequel l'ensemble de fixation de câble (160) est monté de façon amovible dans une direction transversale par rapport au passage axial (114).

11. Agencement de boîtier selon la revendication 10, dans lequel le conduit (110) présente un profil transversal latéral arrondi.

12. Agencement de boîtier selon la revendication 10, dans lequel le conduit (110) présente un profil transversal latéral oblong.

13. Agencement de boîtier selon la revendication 10, dans lequel la base (100) définit au moins un orifice de câble (109) supplémentaire au niveau de la première extrémité (101), l'orifice de câble (109) supplémentaire allant également de l'extérieur de la base (100) jusqu'à l'intérieur (105) de la base (100) ; et dans lequel l'agencement de boîtier comprend en outre :
au moins un conduit (110) supplémentaire s'étendant à travers l'orifice de câble (109) supplémentaire et définissant un passage axial (114) à travers ce dernier, le conduit (110) supplémentaire comprenant des arrêts (115) s'étendant vers l'intérieur dans le passage axial (114) au niveau d'une extrémité intérieure du conduit (110) supplémentaire.

14. Agencement de boîtier selon la revendication 13, dans lequel le conduit (110) présente un profil transversal latéral arrondi et le conduit (110) supplémentaire présente un profil transversal latéral oblong.

15. Agencement de boîtier selon les revendications 10 à 14, dans lequel l'ensemble bloc de scellement (120, 140) est verrouillé à l'extrémité intérieure du conduit (110).
